# EUROPÄISCHE PATENTSCHRIFT

(11) **EP 1 729 949 B1**
(45) Veröffentlichungstag und Bekanntmachung des Hinweises auf die Patenterteilung: **13.07.2011**
(21) Anmeldenummer: 05714722.5
(22) Anmeldetag: 29.03.2005
(51) Int. Cl.: B29C 70/44

(54) **VERFAHREN ZUR HERSTELLUNG VON FORMKÖRPERN AUS THERMOPLASTISCHEM MATERIAL**
METHOD FOR PRODUCING MOLDED BODIES FROM THERMOPLASTIC MATERIAL
PROCEDE DE PRODUCTION DE CORPS MOULES EN MATIERE THERMOPLASTIQUE

(30) Priorität: 30.03.2004 CH 5442004
(43) Veröffentlichungstag der Anmeldung: 13.12.2006
(73) Patentinhaber: ESORO AG, 8117 Fällanden (CH)
(72) Erfinder: HÜSLER, Daniel, CH-8053 Zürich (CH)
(86) Internationale Anmeldenummer: PCT/CH2005/000180
(87) Internationale Veröffentlichungsnummer: WO 2005/095091

(56) Entgegenhaltungen:
- EP-A- 1 238 784
- WO-A-02/058916

## Beschreibung

Die Erfindung betrifft ein Verfahren zur Herstellung von Formkörpern aus thermoplastischem Material mit oder ohne Faserverstärkung in einem einstufigen Herstellprozess gemäss Oberbegriff von Anspruch 1.

Zur Herstellung solcher struktureller Formkörper wird z.B. das Thermoformen eingesetzt, welches kurze Taktzeiten für grosse Serien ermöglicht. Es erfordert jedoch sehr hohe Investitionen für grosse Pressen und teure aufwändige Werkzeuge, so dass diese Verfahren für mittlere und kleinere Serien viel zu teuer sind. Überdies sind auch Aufbau und Formgebungen solcher Formkörper sehr eingeschränkt.

Das Vakuumformen, z.B. gemäss EP 0 893 235 A3, stellt ein viel kostengünstigeres Verfahren dar, welches jedoch sehr lange Zykluszeiten von z.B. 40 Min. erfordert und welches somit nur für kleine Serien einsetzbar ist. Beim Vakuumformen wird thermoplastisches Material mit Faserverstärkungen auf eine geformte Unterlage gelegt, mit einer luftdichten Membran abgedeckt und unter Vakuum in einem Ofen aufgeheizt, verschmolzen und konsolidiert und anschliessend wieder abgekühlt. Dazu werden beidseitige Entlüftungsschichten und Trennfolien als Verbrauchsmaterial benötigt, und es ist auch eine Nachbearbeitung erforderlich. Die Formgebung ist hier zudem beschränkt und es kann nur eine einseitig definiert geformte Oberfläche hergestellt werden.

Die WO 02 058 916 A offenbart ein Verfahren zur Herstellung von Formkörpern aus thermoplastischem Material mittels einer Formschale, einer oberen und einer unteren Druckkammer je mit elastischen Kammerwänden. In den Druckkammern zirkuliert ein Heiz- und Kühlfluid, wobei ein äusserer Druck darauf ausgeübt wird zum Schmelzen und Abkühlen des thermoplastischen Materials.

Die EP 1 238 784 A offenbart ein duroplastisches Verfahren zur Herstellung durch Aushärtung eines duroplastischen schalenartigen Gegenstands. Dabei werden ein elastisches und ein festes metallisches Formteil, ein Heiz- und Kühlfluid in einer Druckkammer sowie evakuieren der eingelegten Schichtmaterialien eingesetzt. Bei diesem duromeren Verfahren wird kein Autoklav benötigt;.

Es ist daher Aufgabe der vorliegenden Erfindung, die Nachteile bisheriger Verfahren zu überwinden und ein einstufiges Verfahren zur kostengünstigen, serienmässigen und automatisierbaren Herstellung von Formkörpern hoher Qualität mit kürzeren Zykluszeiten und mit verbesserten Eigenschaften zu schaffen und damit Formkörper mit strukturellem Aufbau herzustellen, mit einem weiten Spektrum von Möglichkeiten bezüglich Aufbau, Formgebungen und Design mit beidseitig definiert geformten Oberflächen und insbesondere auch mit beidseitigen porenfreien Sichtoberflächen.

Diese Aufgabe wird erfindungsgemäss gelöst durch ein Verfahren zur Herstellung von Formkörpern nach Anspruch 1. Das Verfahren eignet sich sowohl für einfachere unverstärkte Formkörper mit beidseitigen Sichtoberflächen als vor allem auch für faserverstärkte Strukturteil, welche hohen mechanischen Anforderungen genügen können.

Die abhängigen Patentansprüche betreffen vorteilhafte Weiterbildungen der Erfindung mit besonderen Vorteilen bezüglich optimaler Prozesssteuerung, Aufbau, Formgebungen, Oberflächengestaltung und Design der Formkörper sowie von deren mechanischen Eigenschaften.

Im Folgenden wird die Erfindung anhand von Ausführungsbeispielen und Figuren weiter erläutert, dabei zeigen:
- Fig. 1: an einer erfindungsgemässen Vorrichtung mit beidseitigen Formschalen und Temperiermitteln das Verfahren zur Herstellung von faserverstärkten thermoplastischen Formkörpern,
- Fig. 2: einen zeitlichen Verlauf der Temperatur an den Formschalen
- Fig. 3: einen zeitlichen Verlauf vom auf die Formschalen ausgeübten Differenzdruck,
- Fig. 4: einen zeitlichen Verlauf des resultierenden Kompressionswegs
- Fig. 5: einen zeitlichen Verlauf des Differenzdrucks mit zusätzlichem Aussendruck,
- Fig. 6: ein weiteres Beispiel eines zeitlichen Verlaufs der Temperatur,
- Fig. 7: ein Beispiel von in die Formschalen integrierten Temperiermitteln mit Kanälen und Heizdrähten,
- Fig. 8, 9: Beispiele von Zentrierungen und Rückhaltezonen,
- Fig. 10, 11: Beispiele von Randabdichtungen,
- Fig. 12: Formschalen für eine Liegeschale,
- Fig. 13: Formschalen im Grundriss mit verschiedenen Temperierzonen
- Fig. 14a - d: illustrieren die Verfahrensschritte,
- Fig. 15: einen typischen Schichtaufbau,
- Fig. 16a, b: Beispiele von Ausformungen der Formschalen,
- Fig. 17a: einen Formkörper mit Einlegeteilen,
- Fig. 17b: einen Formkörper mit elastischen Zonen und mit einem Hohlkörper,
- Fig. 18: eine erfindungsgemässe Anlage mit zugeordneten Stationen,
- Fig. 19: zweiteilige, separierbare Formschalen mit einem Randteil und einem Formteil,
- Fig. 20: eine Formschale mit unterschiedlichen Bereichen,
- Fig. 21: einen Formköper mit integriertem Gaskissen.

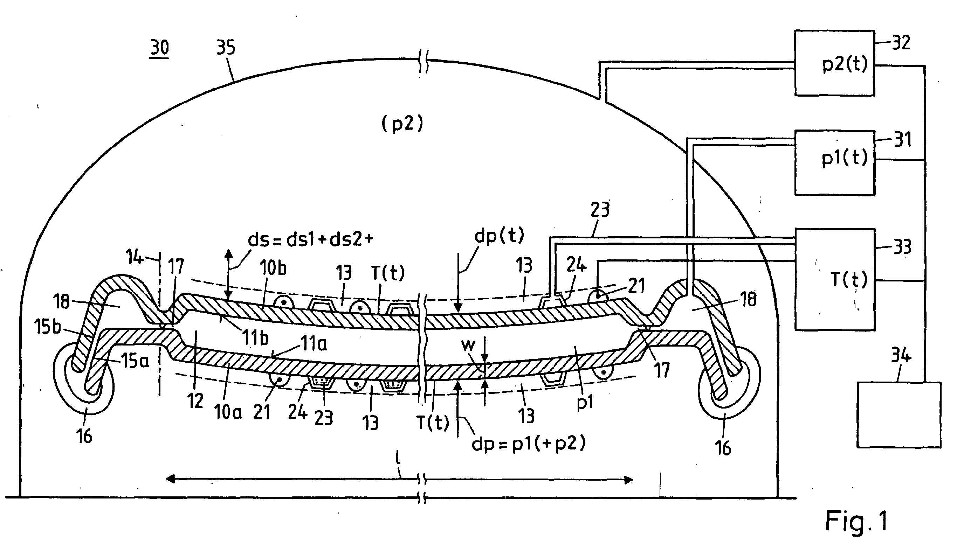

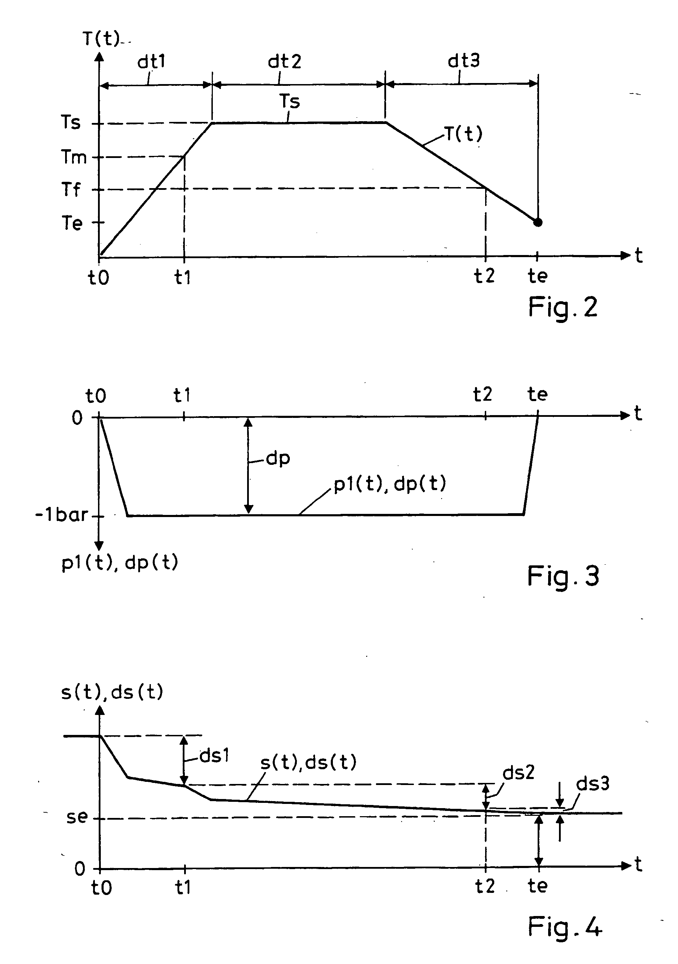

Das erfindungsgemässe Verfahren zur Herstellung von Formkörpern aus faserverstärktem (oder auch aus unverstärktem) thermoplastischem Material in einem einstufigen Herstellprozess, wird an der Anlage 30 von Fig. 1 im Zusammenhang mit den Fig. 2 - 6 illustriert. Fig. 1 zeigt ein Werkzeug mit einer unteren und einer oberen Formschale 10a, 10b, welche eine Formkavität 12 mit beidseitig definierten Oberflächen 11a, 11b bilden. Diese Formschalen sind dünnwandig und metallisch ausgebildet und sie weisen eine Zentrierung 15a, 15b der beiden Formschalen, eine Weg aufnehmende, luftdichte Randabdichtung 16 zwischen den beiden Formschalen und Temperiermittel 13 zum steuerbaren Heizen und Kühlen an beiden Formschalen auf. Die Temperiermittel 13 mit einem guten Wärmeübergang auf die Formschalen, bestehen hier aus Heizdrähten 21 und Kühlkanälen 24 mit einem Kühlmedium 23. Die Formschalen enthalten zusätzlich am Rand eine Rückhaltezone 17 und einen Vakuumkanal 18 sowie eine Vakuumvorrichtung 31 zu Evakuieren der Formkavität, eine Temperiervorrichtung 33 und eine Steuerung 34. Vakuumanschlüsse können auch an geeigneten Stellen innerhalb der Formschalen angebracht sein. Mit einer Druckluftvorrichtung 32 kann in einer Druckkammer 35 ein zusätzlicher Aussendruck p2 auf die Formschalen 10a, 10b ausgeübt werden.

Zur Herstellung der Formkörper wird thermoplastisches Material 2 mit oder ohne Verstärkungsfasern 3 lokal definiert in eine Formschale eingelegt, dann werden die Formschalen geschlossen und evakuiert mit dem Druck p1 und dabei zusammengedrückt, wodurch eine Verkleinerung ds1 des Abstands zwischen den Formschalen erfolgt. Dann werden die Formschalen mit den Temperietmitteln 13 über den Schmelzpunkt Tm des thermoplastischen Materials 2 hinaus aufgeheizt und auf einer Temperatur Ts gehalten zum Konsolidieren und Verfliessen des thermoplastischen Materials unter dem auf die Formschalen wirkenden gerichteten Druck dp, wobei ein weiteres Zusammendrücken der Formschalen um einen Kompressionsweg ds2 erfolgt bis zum konturfüllenden Ausfliessen. Anschliessend wird unter Druck definiert abgekühlt bis zur vollständigen Verfestigung des eingelegten Materials, d.h. unter die Erstarrungstemperatur Tf, worauf die Formschalen geöffnet und der gebildete Formkörper 1 entnommen wird.

Die Dimensionierung der metallischen Formschalen 10 mit relativ geringer Wandstärke w wird so gewählt,
- dass eine genügende mechanische Festigkeit zur Ausführung des Verfahrens besteht,
- die Formschalen formstabil, d.h. in tangentialer Richtung praktisch starr sind, so dass eine definierte Oberflächenform entsteht
- und jedoch dünn genug, so dass die Formschalen in senkrechter Richtung dp leicht biegeelastisch sind, so dass Dickenunterschiede in beschränktem Masse ausgeglichen werden können,
- und dass damit eine sehr gute und in tangentialer Richtung ausgeglichene Wärmeleitung von den Temperiermitteln 13 durch die metallische Formschale auf das eingelegte Material erfolgt.

Dazu kann die Dimensionierung beispielsweise betragen:
- eine Wandstärke w von z.B. 1 - 5 mm, vorzugsweise meist 1 - 3 mm
- bei einer Länge bzw. Längenausdehnung 1 des Formkörpers von z.B. 10 - 100 cm
- und mit einem Wandstärken/Längenverhältnis w/l beispielsweise in der Grössenordnung von 1 %.

Mit den erfindungsgemässen beidseitigen, dünnen metallischen Formschalen 10a, 10b mit Temperiermitteln 13 wird erreicht:
- hohe Heiz- und Kühlleistungen direkt an den Formschalen mit hoher Wärmeleitung , dies ergibt
- kürzere Zyklenzeiten mit optimaler, rascher, dynamischer Steuerung der Temperatur T(t)
- vollständig definierte beidseitige Oberflächenformen
- durch die gerichtete Druckkraft dp, welche auf die Formschalen ausgeübt wird, wird ein seitliches Ausfliessen von thermoplastischem Material bis zum vollständigen Ausfüllen von komplexen Formkavitäten erreicht
- und durch eine geringe Biegeelastizität der dünnen Formschalen können Schichtdicken-Unterschiede bereichsweise beim Abkühlen nachgedrückt und damit auch besser kompaktiert werden.

Damit können Formkörper in hoher Qualität in einem Schritt praktisch in Endform rationell gefertigt werden. Ein nachträgliches Konturschneiden entfällt.

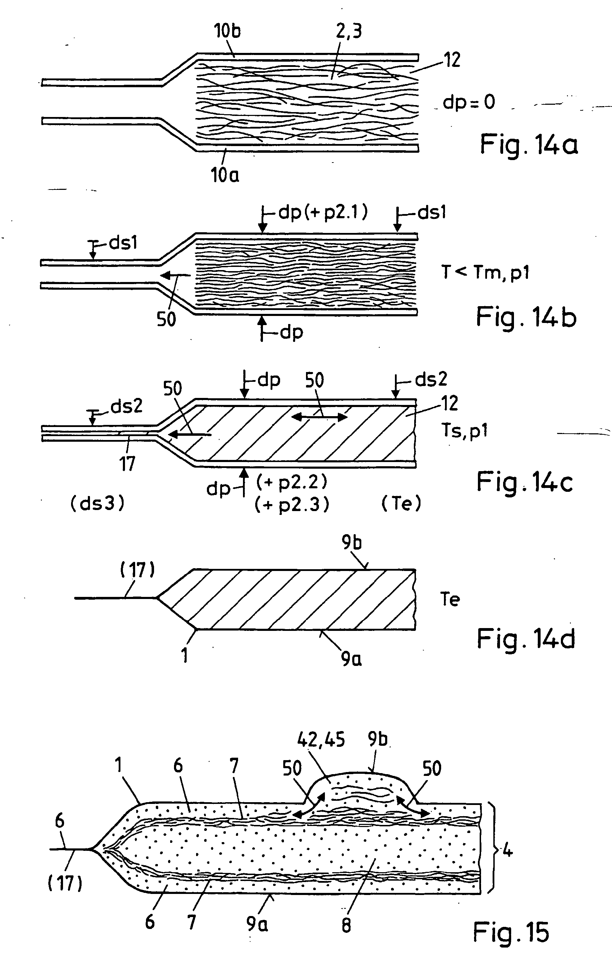

Die Fig. 2-6 illustrieren die erfindungsgemässen Verfahrensschritte: die zeitliche Führung von Temperatur, Druck und der damit bewirkten Kompression bis zum vollständigen Ausfliessen der Kavität und zum Kompaktieren des Formkörpers (siehe auch Fig. 14a-d).

Fig. 2 zeigt den gesteuerten Temperaturverlauf an den Formschalen 10a, 10b in Funktion der Zeit T(t) mit drei Zeitphasen: aufheizen in einer Zeit dt1, konsolidieren und Form ausfliessen in einer Zeit dt2 und abkühlen in einer Zeit dt3. Typische Zeiten sind z.B.:
dt1 = 3 Min. (2 - 5 Min.)
dt2 = 2 Min. (1 - 3 Min.)
dt3 = 3 Min. (2 - 4 Min.)
Eine Zyklusdauer beträgt insgesamt z.B. 8 Min. (5 - 12 Min.).

Das Aufheizen erfolgt relativ rasch (dank unmittelbar an den Formschalen angebrachten Temperiermitteln mit optimalem Wärmeübergang auf das eingelegte Material) über den Schmelzpunkt Tm des thermoplastischen Materials hinaus, welcher nach einer Zeit t 1 erreicht wird, und weiter bis zu einer einstellbaren optimalen Fliesstemperatur Ts (dem eingelegten Material und der gewünschten Formgebung entsprechend) zum optimalen Konsolidieren und Form-Ausfliessen. Anschliessend erfolgt eine gesteuerte Abkühlung bis zur vollständigen Verfestigung des Formkörpers bei einer Erstarrungstemperatur Tf zur Zeit t2 (Tf liegt meist unterhalb Tm) und zur Entformung zu einer Zeit te mit einer Entformungstemperatur Te unterhalb Tf.

Fig. 3 zeigt den Druckverlauf in Funktion der Zeit p(t) bzw. den auf die-Formschalen ausgeübten Differenzdruck dp(t). Das Vakuum bzw. der Unterdruck p1 wird rasch angelegt und bis kurz vor der Entformung (te) aufrecht erhalten. Vorzugsweise erfolgt ein möglichst vollständiges Evakuieren mit p1 =-1 bar, so dass keine Lufteinschlüsse und Gasreste in der Formkavität mehr vorhanden sind. (Mit einem Restvakuumdruck unter 100 mbar, z.B. in der Grössenordnung von 1 mbar.) Für viele Anwendungen genügt Evakuieren mit dem Unterdruck p1 als Differenzdruck dp, d.h. es ist kein zusätzlicher Aussendruck p2 erforderlich.

Fig. 4 zeigt den resultierenden entsprechenden Kompressionsweg s(t) mit mehreren verschiedenen Stufen ds1 ds2, ds3 des Zusammendrückens. Bis zum Erreichen des Schmelzpunkts Tm zur Zeit t1 wird das noch feste Material komprimiert mit einem Kompressionsweg ds1. Anschliessend folgt ein weiterer Kompressionsweg ds2 entsprechend dem Konsolidieren und Verfliessen des thermoplastischen Materials bis zur vollständigen Konturfüllung. Beim Abkühlen entsteht ein Materialschwund. Durch den angelegten Differenzdruck dp wird dabei der entstehende Formkörper weiter kompaktiert bzw. zusammengepresst mit einem weiteren Kompressionsweg ds3.

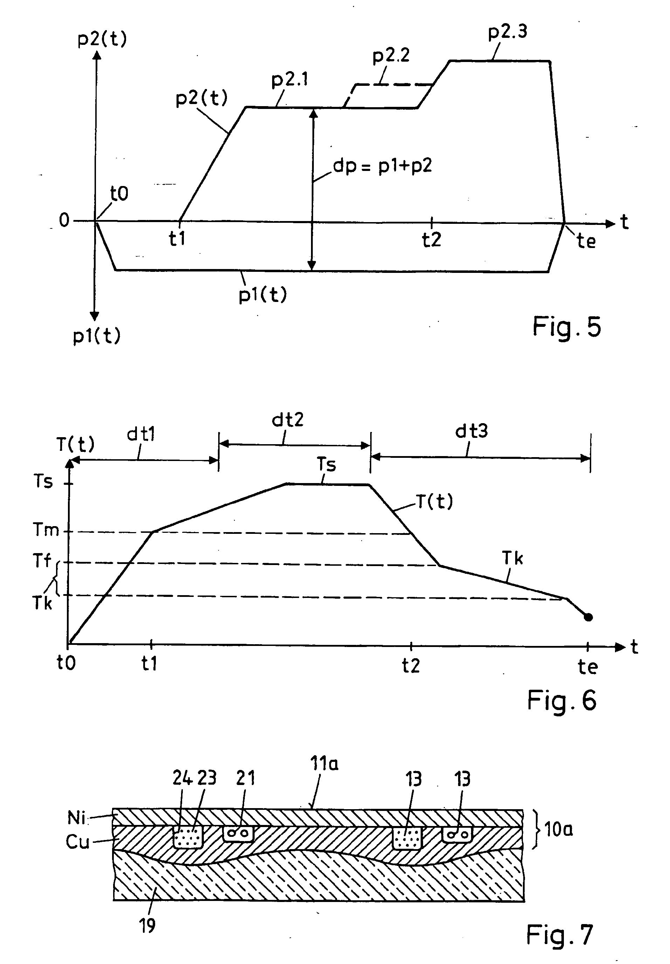

Fig. 5 zeigt den zeitlichen Druckverlauf dp(t), wenn zum Vakuumdruck p l (t) zusätzlich ein äusserer Druck p2(t) auf die Formschalen ausgeübt wird und damit der Differenzdruck dp(t) = p1(t) + p2(t) wesentlich erhöht werden kann, um so einerseits ein rascheres Konsolidieren und Ausfliessen zu erreichen und auch um beim Abkühlen eine noch stärkere Kompaktierung (p2.3) zu bewirken. Zum optimalen Ablauf dieser Vorgänge kann der Aussendruck p2(t) z.B. auch stufenweise erhöht werden auf: p2.1, p2.2, p2.3. Damit können einerseits die Zykluszeiten verkürzt und andererseits die mechanischen Eigenschaften und die kompakte Formgebung von besonders anspruchsvollen Formkörpern weiter verbessert und auch ein Verzug reduziert oder verhindert werden.

Fig. 6 zeigt ein weiteres Beispiel einer gesteuerten, dynamischen Temperaturführung T(t) (abhängig von der Art und der Zusammensetzung des eingelegten Materials). Beim Aufheizen wird hier die Temperatur T(t) über dem Schmelzpunkt Tm langsamer weiter erhöht bis zur Temperatur Ts, um ein ausgeglicheneres anfängliches Vertliessen zu erreichen.

Das Abkühlen erfolgt nicht linear, sondern wird in einem Temperaturbereich, in dem Materialumwandlungen auftreten, insbesondere in einem Kristallisations-Temperaturbereich Tk bei teilkristallinen Thermoplasten, verlangsamt und damit die Kristallisation und die resultierende Festigkeit des Formkörpers erhöht. Die gesteuerte Führung der Temperatur T(t) kann auch lokal unterschiedlich sein. Bei Ausformungen wie dickeren Stellen und Rippen kann zur Vermeidung von Verzug und zur besseren Kompaktierung lokal eine stärkere Kühlleistung vorgesehen sein, damit der ganze Formkörper gleichmässig abgekühlt wird. Diese Temperaturen können beispielsweise für Polypropylen als Thermoplast betragen: Tm = 170°C, Ts = 200°C, Tf = 130°C und Tk = 130 bis 80°C.

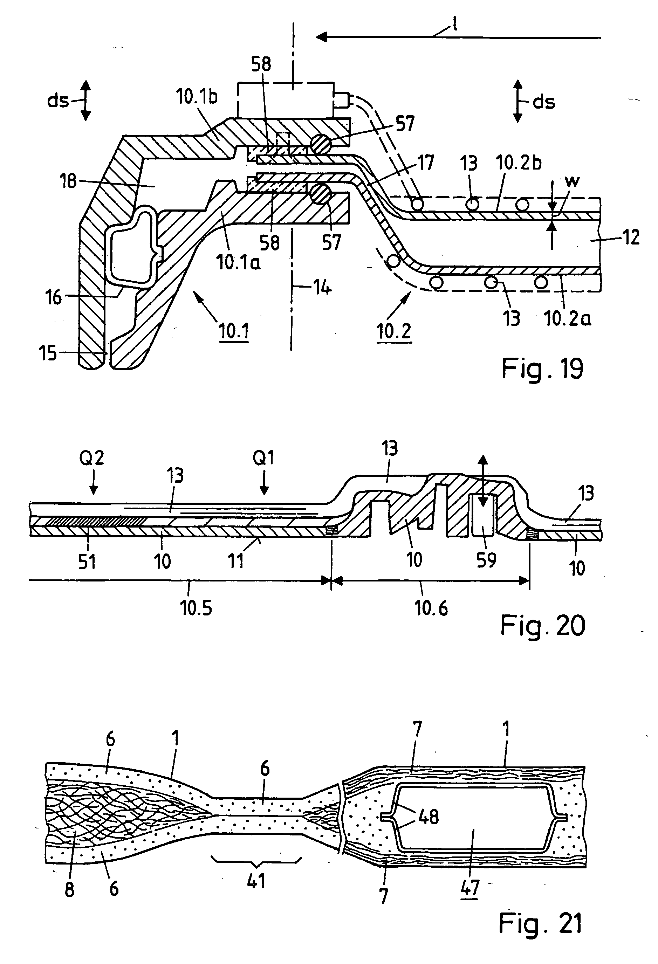

Fig. 7 zeigt weitere vorteilhafte Ausformungen der Temperiermittel 13 an den Formschalen 10. Es ist wichtig, dass zum raschen und gleichmässigen, homogenen Aufheizen und Abkühlen des eingelegten Materials von den Temperiermitteln 13 über die Formschalen ein guter Wärmeübergang mit einer guten Wärmeleitung in den Formschalen erreicht wird. Dazu werden dünne metallische Formschalen 10 eingesetzt, welche auf verschiedene Arten aus Metall hergestellt werden können, z.B. aus tiefgezogenem Blech (auch aus Aluminium). Sie können auch mehrteilig zusammengesetzt werden (Fig. 20). Besonders vorteilhaft sind galvanische Schichten, welche vorzugsweise aus Nickel (Ni) und Kupfer (Cu) bestehen können.

Als Temperiermittel kann mit Vorteil auch ein Fluid, insbesondere ein flüssiges Medium 23 eingesetzt werden, welches in an den Formschalen angebrachten Kanälen 24 zirkuliert. Ein flüssige Medium oder ein Fluid kann sowohl nur als Kühlmittel (z.B. am einfachsten mit Wasser) oder auch als Kühlmittel und als Heizmittel eingesetzt werden. Als Heizmittel und als Kühlmittel für höhere Temperaturen können temperaturbeständige Öle eingesetzt werden. Ein besonders geeignetes Kühlmittel für höhere Temperaturen kann aus einem Wasser/Luft-Gemisch bestehen.

Als elektrisch sehr gut steuerbare Temperiermittel können auch isolierte elektrische Heizdrähte 21 eingesetzt werden, welche an den Formschalen angebracht sind. Im Beispiel von Fig. 7 sind die Temperiermittel 13, hier als Kanäle 24 und als integrierte elektrische Heizdrähte 21, direkt in die Formschalen 10, z.B. in die galvanischen Schichten integriert. Dies ergibt eine rationelle Herstellung und besonders günstige thermische Eigenschaften. Über diesen Temperiermitteln kann eine thermische Isolationsschicht 19 (z.B. Glaswolle) aufgebracht sein. Die Temperiermittel 13 können z.B. auch als flächige Schichten oder Bänder, als Heizkissen und Kühlkissen, an die Formschalen angebracht sein. Mit diesen Temperiermitteln 13 sind sehr gute Kühl- und Heizleistungen erreichbar.

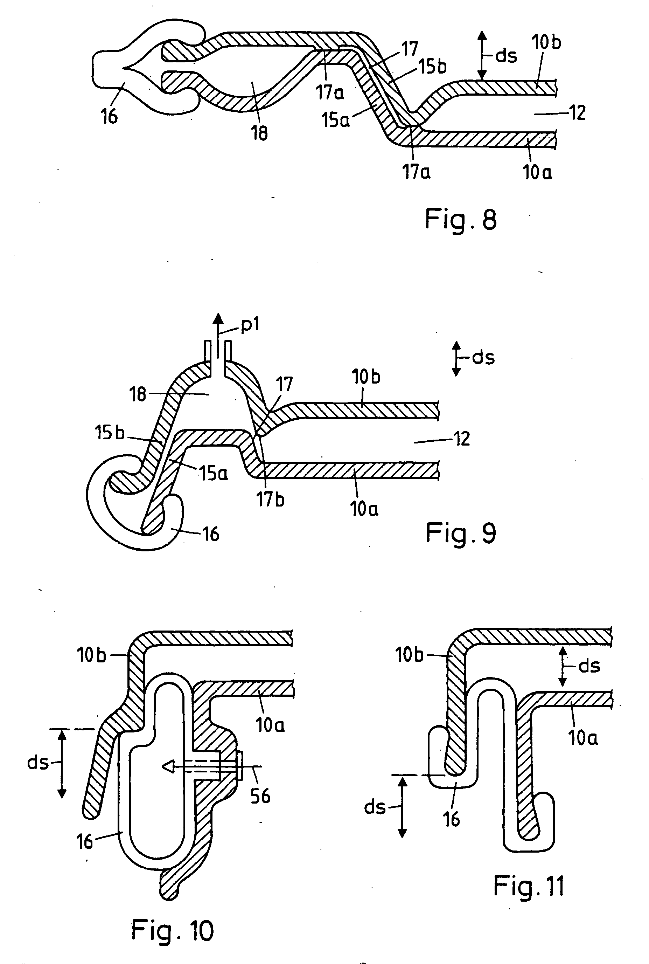

Die Fig. 8 und 9 zeigen Beispiele von Formgebungen von Randbereichen der Formschalen 10a, 10b, welche, aufeinander abgestimmt, Vakuumkanäle 18, Zentrierungen 15 und Rückhaltezonen 17 bilden. Die Vakuumkanäle 18 werden am Rand der Formschalen rundum geführt. Die Zentrierungen 15a, 15b an den beiden Formschalen führen diese beim Zusammentreffen so, dass die Endformen der beiden Oberflächen des resultierenden Formkörpers relativ zueinander genau positioniert sind.

Am Rand der Formkavität 12 sind Rückhaltezonen bzw. Rückhaltemittel 17 für das geschmolzene thermoplastische Material geformt, so dass beim Ausfliessen die Formkavität vollständig durch thermoplastisches Material gefüllt wird bis zur Rückhaltezone 17, und hier dann so weit gestoppt wird, dass der angelegte gleichmässige Druck dp auf die ganzen Formschalen 10 erhalten bleibt und jedoch kein weiteres Material mehr über die Rückhaltezonen austritt. Diese Rückhaltezone weist im Beispiel von Fig. 8 einen sehr dünnen Formspalt 17 auf mit einem Abstand von z.B. nur 0.1 bis 0.5 mm bei Formschluss und mit Kontakstellen 17a, welche ganz geschlossen werden (Nullpressung).

Das Beispiel von Fig. 9 zeigt eine Tauchkante 17b als Rückhaltezone 17, welche bei Formschluss der beiden Formschalen den Ausfluss von weiterem thermoplastischem Material ebenfalls stoppt.

Die Fig. 10 und 11 zeigen Beispiele von Weg aufnehmenden Randabdichtungen 16, welche eine luftdichte Abdichtung im ganzen Prozessverlauf sicherstellen, so dass die Kompressionswege ds aufgenommen werden. Fig. 10 zeigt ein Beispiel einer Hohlprofildichtung, welche hier zudem aufblasbar ist 56 (mit einem passenden Druck), welche im Prinzip als Hohlprofil-Rollbalgdichtung arbeitet.

Fig. 11 zeigt ein Beispiel einer einfachen Rollbalgdichtung, welche die Ränder beider Formschalen 10a, 10b miteinander verbindet und luftdicht abschliesst.

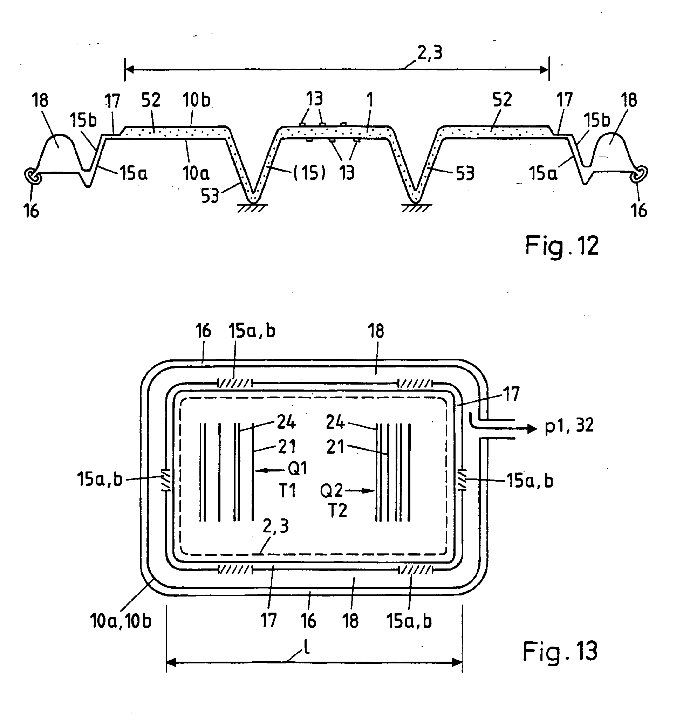

Die Fig. 12 zeigt einen Querschnitt durch die Formschalen 10a, 10b für eine Liegeschale 52 als Formkörper 1, bei welchen zwei Sicken bzw. Stützkufen 53 als Auflagestützen der Liegeschale dienen. Diese Stützkufen 53 weisen deshalb lokal einen wesentlich höheren Faseranteil als Verstärkung auf als die übrigen Bereiche der Liegeschale 52. Mit der Formgebung der Stützkufen 53 kann ebenfalls eine Zentrierung 15 erreicht werden.

Fig. 13 zeigt Formschalen 10a, 10b im Grundriss, wobei hier die Zentrierungen 15a, 15b an den Formschalen nur an einzelnen Stellen ausgebildet sind. Die Rückhaltezonen 17 (wie auch die Randabdichtung 16 und der Vakuumkanal 18) verlaufen dagegen am Rand rund um die ganzen Formschalen herum. Dieses Beispiel illustriert auch eine lokal unterschiedliche Temperierung: In Bereichen oder Zonen, in denen eine stärkere Temperierung Q2, T2 erfolgen soll, können z.B. die Abstände zwischen einzelnen Heizdrähten 21 oder Kühlkanälen 24 kleiner gewählt sein als in Bereichen mit geringer Temperierung Q1, T1. Unterschiedliche Temperierungen können durch unterschiedliche Heiz- und Kühlleistungen (Q1, Q2) oder durch unterschiedliche Temperaturen (T1, T2) erzeugt werden, z.B. durch unterschiedliche Heizleistungen von Heizdrähten 21 oder durch unterschiedliche Temperaturen und Durchflussmengen von Heiz- bzw. Kühlmedien 23. Wie in Fig. 20 illustriert wird, kann auch der Wärmekontakt zwischen Temperiermitteln und Formschalen örtlich varüert werden. So können beispielsweise Rückhaltezonen 17 stärker gekühlt werden und damit die Fliessfähigkeit des Thermoplasts gesteuert reduziert und das weitere Ausfliessen gestoppt werden.

Die Fig. 14a - 14d illustrieren im Zusammenhang mit den Fig. 2 - 6 die Verfahrensschritte weiter. Fig. 14a zeigt das kalt eingelegte, lokal formgerecht positionierte thermoplastische Material 2 mit Verstärkungsfasern 3. Fig. 14b zeigt das durch Evakuieren, bzw. durch den auf die ganzen Formschalen wirkenden gerichteten Druck dp, kompaktierte Material, welches um einen Kompressionsweg ds1 zusammengedrückt wurde. Fig. 14c zeigt das Ausfliessen (50) des thermoplastischen Materials mit vollständigem Ausfüllen der Formkavität 12 bis zur Rückhaltezone 17 mit einem weiteren Kompressionsweg ds2. Anschliessend erfolgt das Abkühlen und Nachkonsolidieren und weiteres Komprimieren mit einem allfälligen weiteren Kompressionsweg ds3. Dabei kann zusätzlich, bei Bedarf ein Aussendruck p2 mit Druckstufen p2.1, p2.2, p2.3 angelegt werden (siehe Fig. 5).

Fig. 14d zeigt den resultierenden Formkörper 1 mit beidseitig definierten geformten Sichtoberflächen 9a, 9b und mit einem sehr dünnen Grat an der Rückhaltezone (17) welcher leicht entfernt werden kann. Somit können Formkörper mit einwandfreier Endform praktisch ohne Abfall einstufig und relativ rasch und ohne Nachbearbeitung produziert werden.

Mit dem erfindungsgemässen Verfahren können verschiedene Materialarten gleichzeitig kalt in die Formschale eingebracht werden und es können lokal unterschiedliche Materialien mit unterschiedlichen Eigenschaften und Formen (wie Fasergehalt, Fliessfähigkeit, Steifigkeit und Materialart) in definierten Positionen in die Formschalen eingelegt werden. Damit kann der Schichtaufbau optimal und mit einem viel grösseren Spektrum von Möglichkeiten als bisher lokal den verschiedensten Anforderungen entsprechend ausgelegt werden bezüglich mechanischer Eigenschaften, Formgebungen und Design von beidseitigen Sichtoberflächen, welche in einem einstufigen Verfahren einfach hergestellt werden können.

Die in die Formschalen eingelegten Materialien, thermoplastisches Material 2 und Verstärkungsfasern 3, können in verschiedenen Formen verwendet werden: Thermoplaste als Fliessmaterial in Form von Folien, Garnen, Granulaten oder Pulver und Faserverstärkungen als Fasergewebe, Gelege, Faser-Vliese, Hybridgarne und auch als Halbzeuge. Geeignete Thermoplaste können z.B. sein Polypropylen PP, Polyamid PA, Polyethylentherephtalat PET, Polybutylentherephtalat PBT, Polycarbonat PC etc. und als Verstärkungsfasern: Glas, Kohle oder Aramid.

Fig. 15 zeigt einen typischen mehrschichtigen Schichtaufbau 4 für einen faserverstärkten Struktur- und Formkörper 1 mit äusseren Deckschichten 6, welche auch Formschichten bilden, darunter mit einer oberen und einer unteren faserverstärkten Strukturschicht 7 und einer mittleren Kernschicht 8, welche eine innere Formschicht bildet. Die Formschichten 6 und 8 weisen dabei eine, den gewünschten Formgebungen entsprechende Fliessfähigkeit und Dimensionierung auf. Als Deckschichten können z.B. auch Farbschichten eingesetzt werden, welche bis zum Abschluss des Formkörpers in die Rückhaltezone 17 hinein verlaufen, während Strukturschichten 7 vor dem Abschluss (17) enden können und somit müssen keine Faserschichten nach der Entformung abgeschnitten werden. Fig. 15 zeigt als Beispiel auch eine Ausformung 42 mit grösserer Wandstärke 45, welche mit passender Materialeinlage gefüllt und ausgeflossen wird.

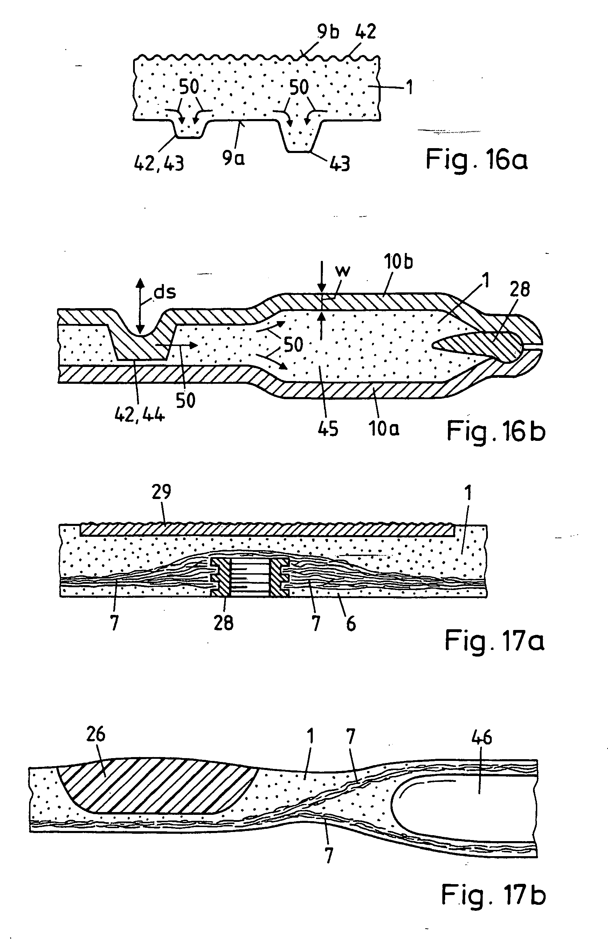

Die Fig. 16a, b zeigen Formschalen 10a, 10b bzw. resultierende Formkörper 1, welche verschiedene Ausformungen 42 aufweisen. Fig. 16a zeigt auf der oberen Oberfläche 9b eine Ausformung in Form einer strukturierten Oberfläche, z.B. mit einem Narbenmuster als Sichtoberfläche. Die untere Oberfläche 9a weist hier Rippen 43 auf, welche in der Fliessphase (dt2) ausgeflossen (50) bzw. vollständig gefüllt wurden, wobei hier lokal entsprechend genügend fliessfähiges Material in die Formschale eingelegt wurde.

Fig. 16b zeigt ein Beispiel mit Ausformungen 42 in Form von Löchern oder Durchbrüchen 44, welche in der Fliessphase erzeugt wurden durch vollständiges Zusammenpressen der beiden Formschalen 10a, 10b an dieser-Stelle 44, wie auch dicke Schichtstellen 45, wobei die Materialeinlage wiederum lokal entsprechend zusammengestellt ist zum vollständigen Ausfliessen (50) der Ausformungen. Ein metallisches Einlegeteil 28 am Rand der Kavität kann nach der Herstellung des Formkörpers wieder entfernt werden zur Bildung eines Hinterschnitts.

Fig. 17a zeigt zwei Beispiele von zusätzlichen, nicht schmelzenden Einlagen, welche in einen Formkörper integriert werden können: eine zusätzliche Oberflächenschicht 29, z.B. als Dekorschicht oder als Gewebekaschierung, und ein Einlegeteil (Insert) 28, welches im Formkörper bleibt, hier z.B. in Form eines Fixierelements oder Gewindes, mit welchen Befestigungen oder Krafteinleitungen realisiert werden können. Dazu wird hier das Einlegeteil 28 mit einem lokal erhöhten Anteil von faserverstärkten Schichten 7 in den Formkörper 1 eingebunden.

Die Fig. 17b illustriert, dass auch weitere Materialien einfach in die Formkörper integriert werden können wie weiche, elastische Materialien, z.B. temperaturbeständige thermoplastische Elastomere TPE, z.B. thermoplastische Oligomere TPO, sowohl als Oberflächenschicht oder auch in bestimmten Bereichen 26, welche lokal eine elastische, weiche Stelle bilden können. Es ist auch möglich, Hohlkörper oder Hohlräume 46 zu bilden, z.B. mittels Gas-Innendruck, mit aufblasbaren Membranen oder mit eingelegten Füllstoffen, z.B. indem ein geformter, nicht schmelzender Kern eingelegt wird, welcher nach dem Verpressen mit Wasser wieder ausgewaschen werden kann.

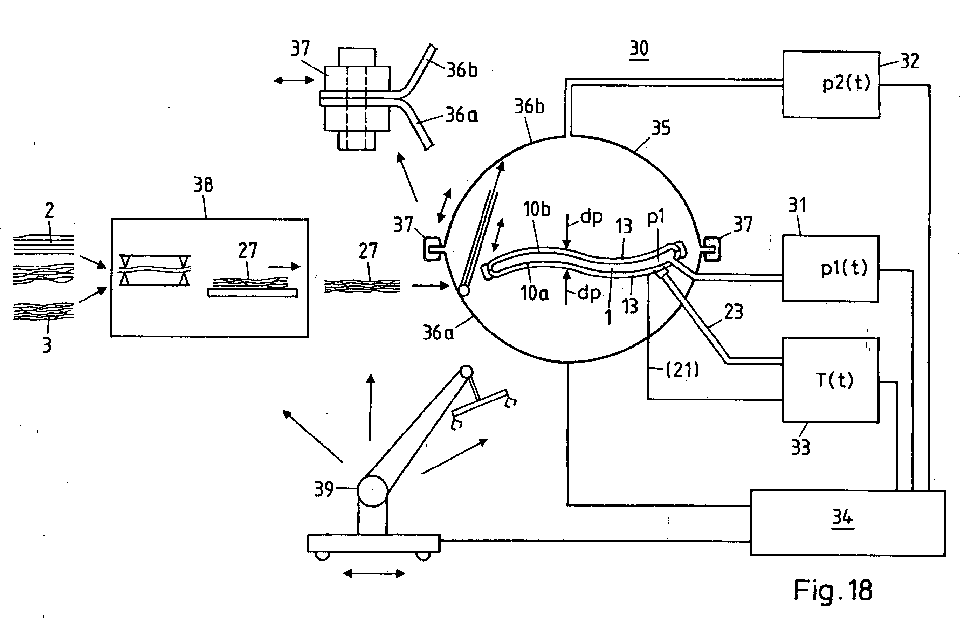

Fig. 18 zeigt eine Anlage 30 zur Ausführung des erfindungsgemässen Verfahrens und mit zugeordneten weiteren Stationen, mit welchen eine automatisierte, serienmässige Herstellung von faserverstärkten Formkörpern möglich ist. Die Anlage 30 enthält eine untere und eine obere Formschale 10a, 10b mit Temperiermitteln 13, welche mit einer Temperiervorrichtung 33 verbunden sind, z.B. mit einer Speisung für Heizdrähte und mit einer Kühlvorrichtung für ein flüssiges Kühlmedium 23, oder auch mit einer

Heizvorrichtung und einer Kühlvorrichtung für ein Heiz- und ein Kühlfluid, welches abwechselnd durch dieselben Kanäle 24 gefördert werden kann, sowie eine Vakuum vorrichtung 31 zur Erzeugung des Unterdrucks plund falls notwendig eine zusätzliche Druckluftvorrichtung 32 zur Erzeugung eines Aussendrucks p2 in einer Druckkammer 35, welche die Formschalen 10a, 10b umschliesst. Ein steuerbarer Aussendruck p2 kann vorzugsweise mit Druckluft von z.B. 1 bis 10 bar realisiert werden. Eine besonders leichte und feste Druckkammer 35 wird z.B. gebildet aus zwei gewölbten Halbschalen 36a, 36b aus endlosfaserverstärktem Kunststoff in einer Wandstärke von z.B. 3-4 mm, welche geöffnet werden können und welche einen Rahmen mit einer Verriegelung 37 aufweisen.

Der Anlage 30 ist eine Konfektionierungsstation 38 zugeordnet zum Zuschneiden von verschiedenen Materiallagen aus Thermoplasten 2 und Faserverstärkungen 3 und zum Zusammenstellen von Materialpacks 27, welche auch weitere Einlagen enthalten können. Mit einem Handlingroboter 39 kann Material bewegt werden zum Zusammenstellen von Materialpacks 27, zum positionierten Einlegen in die Formschalen 10 und zum Entformen. Eine Prozesssteuerung 34 steuert die Verfahrensparameter, d.h. die Temperierung T(t), den Druck p(t) und die Materialbewegungen.

Fig. 19 zeigt ein Beispiel von Formschalen 10, welche separierbar zweiteilig ausgebildet sind mit einem äusseren Randteil 10.1 und einem die Formkavität 12 bildenden inneren Formteil 10.2. So können die beiden Teile separat und unterschiedlich gefertigt werden: der Randteil 10.1 z.B. steifer und mit komplizierteren Formen für Randfunktionen, Führungen, Halterungen, Anschlüsse, Zuleitungen usw. und der Formteil 10.2 mit einfacheren Formen kann z.B. galvanisch, dünnwandig und damit eine leichte Biegeelastizität aufweisend ausgeführt werden. So kann der Formteil 10.2 ausgewechselt werden und es können verschiedene Formteile mit einem Randteil 10.1 verwendet werden zur Herstellung verschiedener Formkörper. Dies ergibt eine Kosteneinsparung bei der Werkzeugfertigung. Es muss auch nur der Formteil 10.2 und nicht der Randteil 10.1 geheizt und gekühlt werden, so dass die Temperierung einfacher, rascher und energiesparender erfolgen kann. Dazu müssen die beiden Teile 10.1 und 10.2 miteinander lösbar verbunden werden, z.B. durch Verschrauben, und sie müssen im Betrieb vakuumdicht verbunden sein, z.B. durch eine Dichtung 57, und eine thermische Isolation 58 aufweisen. Im Randteil 10.1 sind die wegaufnehmende Randabdichtung 16, die Vakuumkanäle 18 und allfällig auch Zentrierungen 15, Befestigungs- und Zuleitungseinrichtungen angeordnet. Im Formteil 10.2 sind die Temperiermittel 13, eine Rückhaltezone 17 und allfällig auch Zentrierungen 15 angeordnet.

Fig. 20 zeigt weitere Beispiele von lokal unterschiedlichen Formschalen bzw. Temperierungen. Auf der linken Seite von Fig. 20 wird ein Beispiel von lokal unterschiedlicher Temperierung (Q1 = schwächer, Q2 = stärker temperiert) gezeigt, bei welchem der Wärmekontakt, d.h. der Wärmeübergang zwischen Temperiermittel 13 (z.B. Heizdrähten und Kühlkanälen) und Formschale 10 stellenweise stärker (51) oder schwächer ausgebildet wird. Die metallischen Formschalen 10 können auch aus mehreren einzelnen Teilen bzw. aus unterschiedlichen Bereichen zusammengesetzt werden. Bereiche mit sehr komplexer Formgebung, z.B. mit engen Radien, Kanten oder Rippen usw. können z.B. auch aus einem Metallstück gefräst oder erodiert werden (z.B. das Formteil oder der Bereich 10.6) und mit anderen Formteilen (10.5) zu einer ganzen Formschale 10 zusammengesetzt werden. Dabei können die verschiedenen Formteile z.B. durch Löten, Schweissen oder auch durch Eingalvanisieren zu einer ganzen Formschale verbunden werden. Als komplexe Formgebung kann z.B. auch ein Ausstosser 59 vakuumdicht in die Formschale integriert werden.

Fig. 21 zeigt weitere Beispiele von partiellen Hohlkörperstrukturen mit definierten Luft-oder Gaseinschlüssen in einem Formkörper. Auf der linken Seite von Fig. 21 weist der Formkörper eine Mittelschicht 8 auf, welche aus einem Vlies mit Lufteinschlüssen besteht und Randschichten 6, welche vollständig konsolidiert sind. An definierten Stellen 41, z.B. am Rand eines Bauteils, kann dieser Schichtaufbau vollständig verpresst und kompaktiert sein durch entsprechend geformte Formschalen 10. Rechts in Fig. 21 ist ein Gaskissen 47 zwischen faserverstärkten Strukturschichten 7 angeordnet. Dabei wird eine definierte Gasmenge (Luft oder ein Inertgas wie Stickstoff) in eine Kunststofffolie 48 gasdicht eingeschweisst zur Bildung eines Gaskissens mit einer gewünschten Form und Lage im Formkörper oder Bauteil 1. Mit solchen partiellen Hohlkörperstrukturen können z.B. besonders steife und leichte Bauteile hergestellt werden.

Im Rahmen dieser Beschreibung werden folgende Bezeichnungen verwendet:
- 1: Formkörper
- 2: thermoplastisches Material
- 3: Verstärkungsfasern, Halbzeuge
- 4: mehrschichtiger Aufbau
- 6: Deckschichten, äussere Formschichten
- 7: faserverstärkte-Strukturschichten
- 8: Kernschicht, innere Formschicht
- 9a, b: Sichtoberflächen von 1
- 10: Formschalen
- 10.1: Randteil
- 10.2: Formteil
- 10a, b: untere, obere Formschale
- 11a, b: Oberflächen von 10
- 12: Formkavität
- 13: Temperiermittel
- 14: Trennstelle von 10.1/10.2
- 15a, b: Zentrierung an 10
- 16: Randabdichtung
- 17: Rückhaltezone
- 17a: Kontaktstellen
- 17b: Tauchkante
- 18: Vakuumkanäle
- 19: Isolationsschicht
- 21: elektrische Heizdrähte
- 23: flüssiges Kühl-/Heizmedium
- 24: Kanäle
- 26: elastische Materialien
- 27: Materialpack
- 28: Einlegeteil (Insert)
- 29: zusätzliche Oberflächenschichten
- 30: Anlage
- 31: Vakuumvorrichtung
- 32: Druckluftzufuhr, -vorrichtung
- 33: Temperiervorrichtung
- 34: Steuerung
- 35: Druckkammer
- 36a, b: Halbschalen
- 37: Verriegelung
- 38: Konfektionierungsstation
- 39: Handlingroboter
- 41: vollständig verpresst
- 42: geometrische Ausformungen
- 43: Rippen
- 44: Löcher, Durchbrüche
- 45: dicke Stellen
- 46: Hohlkörper, Hohlräume
- 47: Gaskissen
- 48: Folien
- 50: ausfliessen
- 51: starker Wärmekontakt
- 52: Liegeschale
- 53: Auflage, Stützsicken
- 56: aufblasbar
- 57: Dichtung
- 58: thermische Isolation
- 59: Ausstosser
- t: Zeit
- dt: Zeitdauer
- dt1: aufheizen
- dt2: ausfliessen
- dt3: abkühlen
- T, Ts, Te: Temperaturen
- Tm: Schmelztemperatur
- Tf: Erstarrungstemperatur
- Tk: Kristallisationstemperatur-Zone
- p: Druck
- p1: Vakuumdruck
- p2: Aussendruck, zusätzlich
- dp: Druckdifferenz
- s: Kompressionsweg
- se: Schichtdicke von 1
- ds: Kompressionsstufen, Wegdifferenzen
- Q1, Q2: verschiedene Temperierungen
- w: Dicke der Formschalen 10
- 1: Länge von 10, 12

## Patentansprüche

1. Verfahren zur Herstellung von Formkörpern (1) aus thermoplastischem Material mit oder ohne Faserverstärkung in einem einstufigen Herstellprozess, **dadurch gekennzeichnet, dass**
- ein Werkzeug eingesetzt wird mit einer unteren und einer oberen formstabilen Formschale (10a, 10b), welche eine Formkavität (12) mit beidseitig definiert geformten Oberflächen (11a, 11b) bilden,
- beide Formschalen dunnwandig und metallisch ausgebildet sind
- mit einer Zentrierung (15a, 15b) der beiden Formschalen,
- mit einer Weg aufnehmenden, luftdichten Randabdichtung (16) zwischen den beiden Formschalen
- und mit Temperiermitteln (13) zum steuerbaren Heizen und Kühlen, welche direkt an beiden Formschalen (10a, 10b) angebracht sind,
- wobei thermoplastisches Material (2) mit oder ohne Verstärkungsfasern (3) lokal definiert in eine Formschale eingelegt wird
- dann die Formschalen geschlossen, anschliessend evakuiert (p1) und dabei zusammengedrückt werden mit einer Verkleinerung (ds1) des Abstands zwischen den Formschalen
- dann beide Formschalen mit den Temperiermitteln über den Schmelzpunkt (Tm) des thermoplastischen Materials (2) aufgeheizt
- und auf einer Temperatur (Ts) gehalten werden zum Konsolidieren und Verfliessen des thermoplastischen Materials unter Druck (dp) mit einem weiteren Zusammendrücken der Formschalen (ds2) bis zum konturfüllenden Ausfliessen,
- anschliessend unter Druck definiert abgekühlt wird bis zur vollständigen Verfestigung des eingelegten Materials
- und dann die Formschalen geöffnet und der gebildete Formkörper (1) entnommen wird.

2. Verfahren nach Anspruch 1, **dadurch gekennzeichnet, dass** zum Konsolidieren und Ausfliessen zusätzlich ein äusserer Druck (p2) auf die Formschalen ausgeübt wird.

3. Verfahren nach Anspruch 2, **dadurch gekennzeichnet, dass** der äussere Druck (p2) in einer Druckkammer (35) mittels Druckluft ausgeübt wird.

4. Verfahren nach Anspruch 1, **dadurch gekennzeichnet, dass** die Formschalen am Rand der Formkavität eine geformte Rückhaltezone (17) für das thermoplastische Material aufweisen.

5. Verfahren nach Anspruch 1, **dadurch gekennzeichnet, dass** am Rand der Formschalen Vakuumkanäle (18) rundum geführt sind.

6. Verfahren nach Anspruch 1, **dadurch gekennzeichnet, dass** mit den Formschalen geometrische Ausformungen (42) wie Rippen (43), Löcher (44), Durchbrüche und unterschiedliche Wandstärken (45) gebildet werden.

7. Verfahren nach Anspruch 1, **dadurch gekennzeichnet, dass** die Formschalen zweiteilig und separierbar ausgebildet sind mit einem festen Randteil (10.1) und einem die Formkavität (12) bildenden Formteil (10.2).

8. Verfahren nach Anspruch 1, **dadurch gekennzeichnet, dass** die Formschalen aus unterschiedlichen Bereichen (10.5, 10.6) zusammengesetzt sind.

9. Verfahren nach Anspruch 1, **dadurch gekennzeichnet, dass** die metallischen Formschalen (10a, 10b aus galvanischen Schichten, vorzugsweise aus Ni und Cu bestehen.

10. Verfahren nach Anspruch 1, **dadurch gekennzeichnet, dass** elektrische Temperiermittel in Form von isolierten elektrischen Heizdrähten (21) an den Formschalen angebracht sind.

11. Verfahren nach Anspruch 1, **dadurch gekennzeichnet, dass** als Temperiermittel ein flüssiges Medium (23) als Kühlmittel oder als Heiz- und Kühlmittel eingesetzt wird, welches in Kanälen (24) zirkuliert, die an den Formschalen (10a, 10b) angebracht sind.

12. Verfahren nach Anspruch 1, **dadurch gekennzeichnet, dass** die Temperiermittel (13) direkt in die Formschalen (10) integriert sind.

13. Verfahren nach Anspruch 1, **dadurch gekennzeichnet, dass** an den Formschalen eine lokal unterschiedliche Temperierung (Q1, Q2, 51) erzeugt wird.

14. Verfahren nach Anspruch 1, **dadurch gekennzeichnet, dass** die Temperierung beim Abkühlen nicht linear erfolgt, mit einem langsameren Durchlaufen bestimmter Temperaturzonen (Tk).

15. Verfahren nach Anspruch 1, **dadurch gekennzeichnet, dass** lokal unterschiedliche Materialien mit unterschiedlichen Eigenschaften und Formen in definierten Positionen in die Formschalen eingelegt werden.

16. Verfahren nach Anspruch 1, **dadurch gekennzeichnet, dass** zusätzliche Oberflächenschichten (29) in die Formschalen eingelegt werden.

17. Verfahren nach Anspruch 1, **dadurch gekennzeichnet, dass** an den Oberflächen oder in bestimmten Zonen lokal definiert weiche, elastische Materialien (26) eingelegt werden.

18. Verfahren nach Anspruch 1, **dadurch gekennzeichnet, dass** Einlegeteile (28) positioniert in die Formschalen eingelegt werden, welche in den Formkörper integriert werden oder nach der Herstellung wieder entfernt werden.

19. Verfahren nach Anspruch 1, **dadurch gekennzeichnet, dass** Hohlkörper oder Hohlräume (46) gebildet werden.

20. Verfahren nach Anspruch 1, **dadurch gekennzeichnet, dass** versiegelte Gaskissen (41) mit einem definierten Gasinhalt in die Formschalen eingelegt werden.

21. Verfahren nach Anspruch 1, **gekennzeichnet durch** eine zugeordnete Konfektionierungsstation (38) zum Zuschneiden und Zusammenstellen eines Materialpacks (27), einen Handlingroboter (39) zum positionierten Einlegen von Material und eine Prozesssteuerung (34) zum Steuern von Temperierung, Druck und Materialbewegungen.

22. Verfahren nach Anspruch 1, **dadurch gekennzeichnet, dass** als Temperiermittel (13), welche an beiden Formschalen direkt angebracht sind,
- ein flüssiges Medium (23), welches als Heiz- und Kühlmittel in Kanälen (24) zirkuliert
- oder elektrische Heizelemente (21) zum Heizen und ein flüssiges Medium (23) in Kanälen (24) zum Kühlen
eingesetzt wird.

## Claims

1. Method for the production of molded bodies (1) out of thermoplastic material with or without fibre reinforcement in a one-step production process, **characterised in that**
- a tool is utilised with a lower and an upper dimensionally stable shell mold (10a, 10b), which form a mold cavity (12) with defined surface shapes on both sides (11a, 11b),
- which both shell molds are designed as thin-walled and metallic,
- with a centering portion (15a, 15b) of both the shell molds,
- with a displacement compensating, air-tight edge seal (16) between the two shell molds
- and with tempering means (13) for the controllable heating and cooling which are directly attached to both shell molds (10a, 10b),
- wherein thermoplastic material (2) with or without reinforcing fibres (3) is inserted into a shell mold in a locally defined manner,
- thereupon the shell molds are closed, subsequently evacuated (p1) and in doing so pressed together with a reduction (ds1) of the distance between the shell molds,
- then both shell molds are heated up with the tempering means to a temperature above the melting point (Tm) of the thermoplastic material (2)
- and held at a temperature (Ts) for the consolidation and flowing of the thermoplastic material under pressure (dp) with a further pressing together of the shell molds (ds2) up to the contour filling flowing out,
- and subsequently cooled down under pressure in a defined manner up to the complete solidification of the inserted material
- and thereupon the shell molds are opened and the formed molded body (1) is removed.

2. Method according to claim 1, **characterised in that** for the consolidation and flowing out in addition an external pressure (p2) is applied to the shell molds.

3. Method according to claim 2, **characterised in that** the external pressure (p2) is applied in a pressure chamber (35) by means of compressed air.

4. Method according to claim 1, **characterised in that** the shell molds at the edge of the mold cavity comprise a shaped retention zone (17) for the thermoplastic material.

5. Method according to claim 1, **characterised in that** on the edge of the shell molds vacuum channels (18) are conducted all around.

6. Method according to claim 1, **characterised in that** with the shell molds geometrical shapings (42) such as ribs (43), holes (44), break-outs and differing wall thicknesses (45) are produced.

7. Method according to claim 1, **characterised in that** the shell molds are designed as two parts and as separatable with a fixed edge part (10.1) and a mold part (10.2) forming the mold cavity (12).

8. Method according to claim 1, **characterised in that** the shell molds are composed of differing zones (10.5, 10.6).

9. Method according to claim 1, **characterised in that** the metallic shell molds (10a, 10b) consist of galvanic layers, preferably of nickel Ni and copper Cu.

10. Method according to claim 1, **characterised in that** electrical tempering means are attached to the shell molds in the form of insulated electric heating wires (21).

11. Method according to claim 1, **characterised in that** as tempering means a liquid medium (23) is utilised as cooling means or as heating means and as cooling means, which circulates in channels (24), which channels are attached to the shell molds (10a, 10b).

12. Method according to claim 1, **characterised in that** the tempering means (13) are directly integrated into the shell molds (10).

13. Method according to claim 1, **characterised in that** on the shell molds a locally differing tempering (Q1, Q2, 51) is produced.

14. Method according to claim 1, **characterised in that** the tempering during the cooling down does not take place in a linear manner, with a slower transition through certain temperature zones (Tk).

15. Method according to claim 1, **characterised in that** locally differing materials with differing characteristics and shapes are inserted into the shell molds in defined positions.

16. Method according to claim 1, **characterised in that** additional surface layers (29) are inserted into the shell molds.

17. Method according to claim 1, **characterised in that** on the surfaces or in certain zones soft, elastic materials (26) are inserted in a locally defined manner.

18. Method according to claim 1, **characterised in that** inserts (28) are inserted into the shell molds in a positioned manner, which are integrated into the molded body or else are removed again following the production.

19. Method according to claim 1, **characterised in that** hollow bodies or hollow spaces (46) are formed.

20. Method according to claim 1, **characterised in that** sealed gas cushions (41) with a defined gas content are inserted into the shell molds.

21. Method according to claim 1, **characterised by** an assigned confectioning station (38) for the cutting to size and putting together of a pack of material (27), a handling robot (39) for the positioned insertion of material and a process control system (34) for the controlling of the tempering, pressure and materials' movements.

22. Method according to claim 1, **characterised in that** as tempering means (13), which are directly attached to both shell molds,
- a liquid medium (23) which is circulated in channels (24) as a heating and cooling means
- or electric heating elements (21) for heating and a liquid medium (23) in channels (24) for cooling is used.

## Revendications

1. Procédé pour fabriquer des corps de moule (1) à base de matériau thermoplastique avec ou sans renfort de fibre dans un procédé de fabrication à une étape, **caractérisé en ce**
- **qu'**un outil est utilisé avec une coque de moule inférieure et une coque de moule supérieure indéformable (10a, 10b), lesquelles forment une cavité de moule (12) avec des surfaces (11a, 11b) formées de façon définie des deux côtés,
- les deux coques de moule sont conçues avec une paroi mince et de façon métallique
- avec un centrage (15a, 15b) des deux coques de moule,
- avec une étanchéité de bord (16) enregistrant la course et étanche à l'air entre les deux coques de moule
- et avec des agents de mise en température (13) pour le chauffage et le refroidissement contrôlables, qui sont placés directement sur les deux coques de moule (10a, 10b),
- du matériau thermoplastique (2) avec ou sans fibres de renfort (3) étant inséré de façon définie localement dans une coque de moule,
- les coques de moule étant ensuite fermées, puis évacuées (pl) et alors comprimées avec une réduction (ds1) de la distance entre les coques de moule
- en ce que les deux coques de moule sont réchauffées avec les agents de mise en température au-delà du point de fusion (Tm) du matériau (2) thermoplastique
- et sont amenées à une température (Ts) pour la consolidation et la liquéfaction du matériau thermoplastique sous pression (dp) avec une nouvelle compression des coques de moule (ds2) jusqu'à l'écoulement remplissant le contour,
- on refroidit ensuite de façon définie sous pression jusqu'à la solidification complète du matériau mis en place
- et les coques de moule sont ouvertes ensuite et le corps de moule (1) formé est enlevé.

2. Procédé selon la revendication 1, **caractérisé en ce que**, pour la consolidation et l'écoulement, on exerce en supplément une pression (p2) extérieure sur les coques de moule.

3. Procédé selon la revendication 2, **caractérisé en ce que** la pression extérieure (p2) est exercée dans une chambre de pression (35) au moyen d'air comprimé.

4. Procédé selon la revendication 1, **caractérisé en ce que** les coques de moule présentent sur le bord de la cavité de moule une zone de retenue (17) moulée pour le matériau thermoplastique.

5. Procédé selon la revendication 1, **caractérisé en ce que** des canaux à vide (18) sont guidés tout autour sur le bord des coques de moule.

6. Procédé selon la revendication 1, **caractérisé en ce que** des formations géométriques (42), telles que des nervures (43), des trous (44), des percements et des épaisseurs de paroi (45) différentes sont formées avec les coques de moule.

7. Procédé selon la revendication 1, **caractérisé en ce que** les coques de moule sont conçues en deux parties et de façon séparable avec une partie de bord (10.1) fixe et une partie de moule (10.2) formant la cavité de moule (12).

8. Procédé selon la revendication 1, **caractérisé en ce que** les coques de moule sont constituées de différentes zones (10.5, 10.6).

9. Procédé selon la revendication 1, **caractérisé en ce que** les coques de moule (10a, 10b) métalliques sont constituées de couches galvaniques, de préférence à base de Ni et Cu.

10. Procédé selon la revendication 1, **caractérisé en ce que** des agents électriques de mise en température sont placés sous forme de fils chauffants (21) électriques isolés sur les coques de moule.

11. Procédé selon la revendication 1, **caractérisé en ce que**, comme agent de mise en température, on utilise un fluide liquide (23) comme agent de refroidissement ou comme agent de chauffage ou de refroidissement, lequel circule dans des canaux (24) qui sont placés sur les coques de moule (10a, 10b).

12. Procédé selon la revendication 1, **caractérisé en ce que** les agents de mise en température (13) sont intégrés directement dans les coques de moule (10).

13. Procédé selon la revendication 1, **caractérisé en ce qu'**une mise en température (Q1, Q2, 51) localement différente est générée sur les coques de moule.

14. Procédé selon la revendication 1, **caractérisé en ce que** la mise en température ne s'effectue pas de façon linéaire lors du refroidissement, avec un passage plus lent dans certaines zones de température (Tk).

15. Procédé selon la revendication 1, **caractérisé en ce que** des matériaux localement différentes présentant des propriétés et des formes différentes sont mis en place dans des positions définies dans les coques de moule.

16. Procédé selon la revendication 1, **caractérisé en ce que** des couches de surface (29) supplémentaires sont introduites dans les coques de moule.

17. Procédé selon la revendication 1, **caractérisé en ce que** des matériaux (26) souples et élastiques sont mis en place de façon définie localement sur les surfaces ou dans certaines zones.

18. Procédé selon la revendication 1, **caractérisé en ce que** des pièces d'insertion (28) sont mises en place et positionnées dans les coques de moule, qui sont intégrées dans le corps de moule ou sont enlevées à nouveau après la fabrication.

19. Procédé selon la revendication 1, **caractérisé en ce que** des corps creux ou des cavités (46) sont formés.

20. Procédé selon la revendication 1, **caractérisé en ce que** des coussins de gaz scellés (41) présentant un contenu de gaz défini sont introduits dans les coques de moule.

21. Procédé selon la revendication 1, **caractérisé par** une station de confectionnement (38) attribuée pour la découpe et l'élaboration d'un pack de matériau (27), un robot de manutention (39) pour l'insertion positionnée de matériau et une commande de processus (34) pour la commande de la mise en température, de la pression et des mouvements de matériau.

22. Procédé selon la revendication 1, **caractérisé en ce que**, comme agents de mise en température (13), qui sont placés directement sur les deux coques de moule,
- on utilise un fluide (23) liquide qui circule comme agent de chauffage et agent de refroidissement dans des canaux (24)
- ou des éléments de chauffage (21) électriques pour le chauffage et un fluide (23) liquide dans des canaux (24) pour le refroidissement.
